# EUROPEAN PATENT APPLICATION

(11) **EP 2 757 493 A2**
(43) Date of publication of application: **23.07.2014**
(21) Application number: 14152195.5
(22) Date of filing: 22.01.2014
(51) Int. Cl.: G06F 17/30

(54) **Natural language processing method and system**

(30) Priority: 22.01.2013 US 201361755076 P
(71) Applicant: Maluuba Inc., Waterloo, Ontario N2L 3K8 (CA)
(72) Inventor: The designation of the inventor has not yet been filed
(74) Representative: Krebs, Achim

(57) **Abstract**

A method, system and non-transitory computer-readable medium are provided for improving a statistical classification system, such as a statistical classification system that accepts natural language voice queries as inputs. A clustering engine may create one or more clusters of queries where the queries in each cluster are related in some way. A reviewing module may be employed to determine whether each cluster relates to an existing category supported by the classification system, a new category that can be supported by the classification system by training statistical models with the data from the cluster, is ambiguous, or is not useful to improve the classification system. For clusters determined to be useful for improving the system, the data in the clusters may be added to an existing training set or used as a training set to train new statistical models.

## Description

### FIELD OF THE INVENTION

The present subject matter relates to natural language processing, and more particularly, to a system, method and computer program product for building and improving classification models.

### BACKGROUND

A known approach in creating classification models is to collect and label data manually as belonging to a particular class. Models can then be trained to classify incoming data as belonging to one or more of the classes.

Unfortunately, this approach has several shortcomings. Classifiers often require large amounts of data to become accurate above an acceptable error rate, and collecting and labeling data manually (i.e. by individuals) is expensive and time consuming. In addition, individuals may differ in how they label data leading to data that is labeled inconsistently and even incorrectly. Furthermore, in applications that are already being used, manually evaluating the correctness of classifications already performed does not readily recognize new classes that may be added to the application to increase the accuracy of the application and satisfy user demands.

### BRIEF DESCRIPTION OF DRAWINGS

Exemplary embodiments of the subject matter will now be described in conjunction with the following drawings, by way of example only in which:
Figure 1 is a block diagram showing one embodiment of a networked environment of an intelligent services system for providing software services to users;
Figure 2 is a block diagram illustrating one embodiment of the components of the intelligent services engine of Figure 1;
Figure 3 is a block diagram illustrating one embodiment of the components of a computing device for implementing various aspects of the subject matter disclosed herein;
Figure 4 is a block diagram illustrating one embodiment of the components of a performance improvement engine;
Figure 5 is a flow diagram of exemplary operations of the performance improvement engine for improving a classification system which may be implemented by the intelligent services engine of Figure 1; and
Figure 6 is a flow diagram illustrating one embodiment of how the performance improvement system can be employed to improve a classification system.

For convenience, like reference numerals refer to like parts and components in the various drawings.

### SUMMARY

Disclosed is a system, computer-implemented method, and computer program product for using one or more clustering techniques to process a predetermined dataset containing terms (e.g. voice commands initiated remotely by users of wireless devices) that could not be accurately classified using existing statistical classifiers.

In some embodiments, one or more clustering techniques can be used to create one or more clusters of data from the dataset. The clusters may relate to new categories that were not supported by a computer application when the data in the dataset was gathered. In some aspects, the clustering techniques are applied iteratively, so that sub-clusters may be created from the previous clusters, sub-sub clusters may be created from the sub-clusters, and so on.

In some embodiments, a cluster that represents a new category may be used to train one or more statistical classifiers that may be used to categorize additional data (e.g. received as voice commands initiated remotely) into the new category. For example, a given software application may support natural language queries related to the categories weather, calendar and movies. Some users, however, may ask questions related to other categories such as sports. As natural language query data is collected by the application in real-time, one or more clustering techniques may be used to accomplish several objectives, including: 1) identifying data related to categories not supported by the software application; 2) finding data that has been incorrectly classified, thereby indicating classification models that can be improved; 3) finding data that may be used to add to training data for an existing classifier; and 4) finding ambiguous clusters that may be manually curated and used to improve existing classifiers and create additional classifiers.

In various aspects, the dataset is populated as users interact with a classification system, for example, a natural language processing system that a user may interact with using natural language voice inputs. Other aspects and advantages of the subject matter disclosed herein will become apparent from the following detailed description taken in conjunction with the accompanying drawings.

There is provided a computer-implemented method for improving a statistical classification system comprising one or more statistical classifiers, the one or more statistical classifiers configured to classify an input query into one category of a set of one or more categories. The method comprises storing an input query dataset comprising a plurality of input queries; performing one or more iterations of clustering operations on the input query dataset to create clusters of input queries related by category, wherein each of the one or more input queries is assigned to one of the clusters; for a respective one of the clusters, training a statistical classifier to classify the one or more input queries into the respective related category; and providing the statistical classifier for implementing in the statistical classification system.

The clustering operations may utilize one or more of K-means, Lloyd's algorithm, other distance measures, and Naïve Bayes clustering techniques.

The method may comprise automatically filtering the clusters using a probability threshold to at least one of: eliminate a particular cluster and eliminate a particular input query from a particular cluster.

Training the statistical classifier may comprise one of retraining one of the statistical classifiers from the statistical classification system; and training a new statistical classifier for a new category for the statistical classification system.

A user interface may be provided for manually identifying a respective cluster as one of: useful for adding to an existing training set for retraining one of the statistical classifiers from the statistical classification system; useful for training the new statistical classifier for the new category for the statistical classification system; a candidate for manual curating; and not currently useful for improving the statistical classification system. A user interface may be provided for initiating training in accordance with said identifying.

The statistical classification system may comprise a natural language processing system and the input queries comprise audio queries or text-based queries derived from audio queries. The audio queries can be voice commands.

The input query dataset may include input queries related to one or more categories which are additional to the categories in the set of one or more categories. A computer system and computer readable memory aspect is also provided.

### DETAILED DESCRIPTION

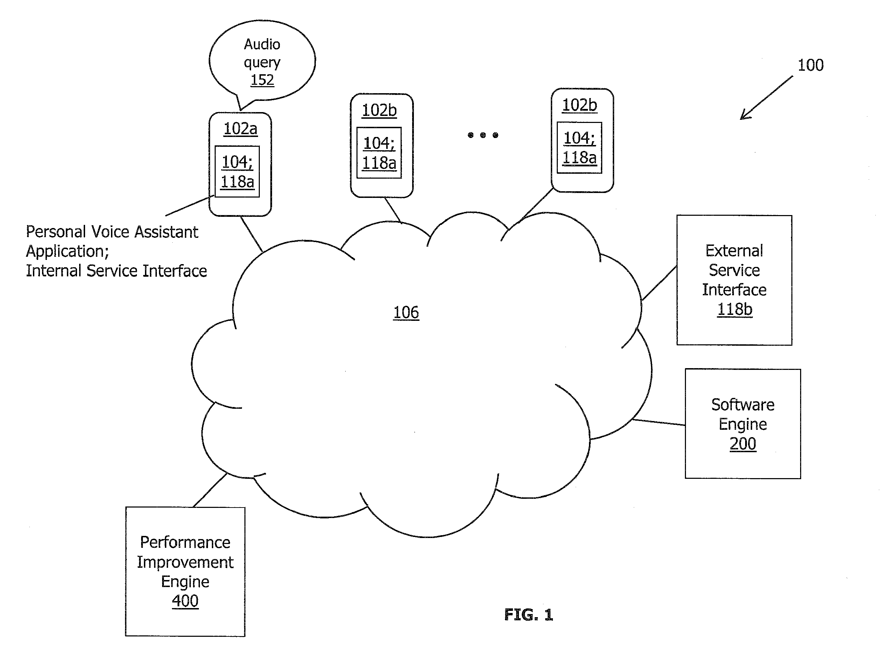

Referring to Figures 1-4, an exemplary networked environment 100 can be configured to provide services and/or information to users of devices 102a - 102n. In one embodiment, a user may utter an audio query 152 to an application 104 on an input device 102 (such as a smartphone) which directs the audio command or a text representation thereof to an intelligent services engine 200 for processing across a network 106 such as the Internet, cellular networks, WI-FI, etc. The intelligent services engine 200 may comprise a Natural Language Processing (NLP) engine 214 configured to derive the intent of the user and extract relevant entities from the user's audio query 152. As will be appreciated, many users may simultaneously access the intelligent services engine 200 through devices 102a,b...n (e.g. smartphones) over a wired and/or wireless network 106.

In some embodiments, intelligent services engine 200 includes one or more computational models (e.g. statistical classification models) implemented by one or more computer processors for classifying the audio query 152 (e.g. a voice command) into a particular class. Additional models may be employed to extract entities from the user's input which represent particular people, places or things which may be relevant to accomplishing a command or providing information desired by a user. For example, a user may utter a voice query such as "Show me the weather forecast for New York City for the weekend" which can be processed by the intelligent services engine 200 using an NLP engine 214 that supports weather-related queries. The NLP engine 214 may correctly classify the user's query as relating to the weather class by applying one or more statistical models. The NLP engine 214 may then apply one or more entity extraction models to extract relevant additional information from the user's query such as the city name (i.e. New York City) and/or the time range (i.e. the "weekend" which can be normalized to a particular date range).

The performance improvement engine 400 disclosed herein may be employed with the intelligent services engine 200, including the NLP engine 214, to recognize additional classes of data that are in demand by users but not yet supported by the system, as well as to provide additional training data to models that already exist to improve their performance in classifying inputs. In the context of this specification, the terms "classes", "categories" and "domains" are used interchangeably.

For example, a particular NLP engine 214 powered by intelligent services engine 200 may support natural language queries relating to weather, stocks, television, news, and music. Users of such a system may ask questions such as "What is the current weather"; "How is the Dow Jones™ doing today"; "When is 60 Minutes™ on"; "Show me the current news for the NFL™"; "I want to hear some rap music", etc. It may be found, however, that users ask questions about classes that are not supported by the intelligent services engine 200, or ask questions in a way that the models within the intelligent services engine 200 are unable to process correctly. As an example, some users may ask questions related to movies such as "What movies are playing this weekend in San Francisco".

The performance improvement engine 400 disclosed herein is configured to use some or all data entered by users (in this example, audio queries 152 or text representations thereof) to improve the intelligent services engine 200 by recognizing user inputs that relate to supported categories (i.e. weather, stocks, television, news and music in the example above), unsupported categories (i.e. movies in the example above), ambiguous data (e.g. inputs that may or may not be useful in improving the intelligent services engine 200), and data which is not useful in improving the intelligent services engine 200. As will be described in more detail below, the performance improvement engine 400 can comprise a clustering engine 402 that performs one or more clustering operations on user data gathered in real-time to improve the performance of a classification system. For example, the clustering engine 402 can create clusters 404 of data that can be used by a training module 408 to train statistical models for recognizing new classes of queries (i.e. models currently unsupported by the intelligent services engine 200).

Although the performance improvement engine 400 disclosed herein is described as being applied to a statistical classification system in general (and an NLP classification system in particular), a person skilled in the art will readily recognize that the clustering techniques of the performance improvement engine 400 may be applied to a variety of classification systems, including systems that use rule-based, ontology-based, statistical-based and/or hybrid classification models.

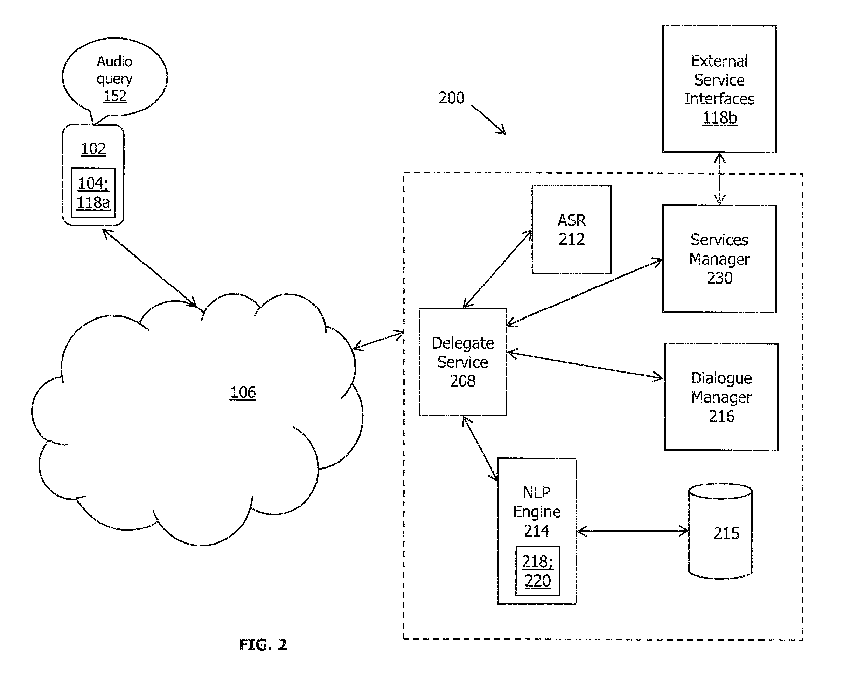

Figure 2 illustrates a block diagram of one embodiment of the intelligent services engine 200. The intelligent services engine 200 includes an Automatic Speech Recognition (ASR) module 212 configured to convert an audio query 152 into a text representation of the audio query 152. The intelligent services engine 200 may include several components/modules that facilitate the processing of an audio query 152 as well as intelligently derive the intention of the user from audio query 152 as well as select an appropriate external service interface 118b and/or internal service interface 118a adapted to perform the task or provide the information desired by the user. The intelligent services engine 200 may be configured to transmit instructions to one or more service interfaces 118 to direct the one or more service interfaces 118 to perform commands based on the intent of the user derived by the NLP engine 214.

The input device 102 may be a laptop or desktop computer, a cellular telephone, a smartphone, a set top box, and so forth to access the intelligent services engine 200. The device 102 may include an application 104 resident on the input device 102 which provides an interface for accessing the intelligent services engine 200 and for receiving output and results produced by the intelligent services engine 200 and/or service interfaces 118 in communication with the intelligent services engine 200.

By using and interacting with intelligent services engine 200, a user can obtain services and/or control a input device 102 by expressing audio queries 152 to the application 104. For example, a user may search the Internet for information by expressing an appropriate audio query 152 into a device 102 such as, "What is the capital city of Germany?" The application 104 receives the audio query 152 by interfacing with the microphone(s) 336 of the device 102, and may direct the audio query 152 to the intelligent services engine 200. In some exemplary embodiments, the user may input a command via expressing the query in audio form and/or by using other input modes such as touchscreen 330, keyboard 350, mouse (not shown), and so forth.

In various embodiments, a user may interact with application 104 to control other items such as televisions, appliances, toys, automobiles, etc. In these applications, an audio query 152 is provided to intelligent services engine 200 in order to derive the intent of the user as well as to extract pertinent entities. For example, a user may express an audio query 152 such as "change the channel to ESPN™" to an application 104 configured to recognize the intent of the user with respect to television control. The audio query 152 may be routed to intelligent services engine 200 which may interpret (using one or more statistical models) the intent of the user as relating to changing the channel and extract entities (using one or more statistical models) such as ESPN™. The intelligent services engine 200 may directly send an instruction to the television (or set-top box in communication with the television) to change the channel or may send a response to the device 102, in which case the device 102 may control the television (or set-top box) directly using one of a variety of communication technologies such as Wi-Fi, infrared communication, etc.

Delegate service 208, ASR module 212, NLP engine 214, dialogue manager 216, and services manager 230 cooperate to convert the audio query 152 into a text query, derive the intention of the user, and perform commands according to the derived intention of the user as embodied in the audio query 152. One or more databases 215 may be accessible to electronically store information as desired, such as statistical models, natural language rules, regular expressions, rules, gazetteers, synsets (sets of synonyms), and so forth.

Delegate service 208 may operate as a gatekeeper and load balancer for all requests received at intelligent services engine 200 from device 102. The delegate service 208 can be configured to route commands to the appropriate components (e.g. ASR module 212, NLP engine 214, etc.) thereby managing communication between the components of intelligent services engine 200. ASR module 212 is configured to convert an audio query 152 into the corresponding text representation.

NLP engine 214 typically receives the text representation of the audio query 152 from ASR module 212 (which, as shown, can occur via delegate service 208) and comprises a classification engine 218 which applies one or more classification models to determine to which category, if any, the audio query 152 belongs. Additional rounds of classification may be applied to determine the particular command intended by the user once the initial classification is determined. For example, for the query "Create a meeting for 3 pm tomorrow with Dave", the NLP engine 214 may initially determine that the command relates to the calendar category, and the NLP engine 214 may execute subsequent classification models to determine that the user wishes to create a calendar meeting. The NLP engine 214 may also comprise an entity extraction engine 220 which can apply one or more iterations of entity extraction models to the text representation of the audio query 152 to extract key pieces of information about the meeting to create such as the time (i.e. 3 pm) and the date (i.e. tomorrow, which can be normalized from the current date). The NLP engine 214 can also be configured to identify and flag any queries that could not be accurately classified using existing classification models/statistical classifiers.

A services manager 230 may be a component within intelligent services engine 200 in order to accomplish the task/provide information requested by the user of device 102. In various embodiments, the services engine 230 interfaces with application programming interfaces (APIs) of third-party external service interfaces 118b such as movie content providers, weather content providers, news providers, or any other content provider that may be integrated with intelligent services engine 200 with an API. In other cases, such as for the calendar example given above, the services manager 230 may interface with an API of an internal service interface 118a API such as a calendar API implemented by the operating system of the device 102. The services manager 230 can be configured to determine an appropriate service interface 118 using readout provided by the NLP engine 214 and a list of available APIs and then call an appropriate service interface 118 according to a predetermined format for completion of the task intended by the user.

A dialogue manager 216 may also be provided with intelligent services engine 200 in order to generate a conversational interaction with the user of device 102 and also to generate a response to be viewed on the user interface of device 102 when a user makes a request. As will be appreciated, intelligent services engine 200 may also include and/or otherwise interface with one or more databases 215 that store information in electronic form for use by the intelligent services engine 200. Information that may be stored in database 215 includes a history of user commands and results, available lists of APIs of content services 118 and their associate API keys and transaction limits, user IDs and passwords, cached results, phone IDs, versioning information, and so forth. The database 215 may also be used to store unclassified queries as for example a dataset 410 to be further processed by the performance improvement engine 400.

It will be appreciated that intelligent services engine 200 may communicate with input devices 102 and/or service interfaces 118 over any communications network 106 such as the Internet, Wi-Fi, cellular networks, and the like. Intelligent services engine 200 may be a distributed system in which components (e.g. delegate service 208, ASR module 212, NLP engine 214, services manager 230 etc.) reside on a variety of computing devices 300 that are executed by one or more computer processors 338. Furthermore, each component may be horizontally scalable in a service-oriented infrastructure manner such that each component may comprise multiple virtual services instantiated on one or more services according to the load balancing requirements on any given service at a particular time.

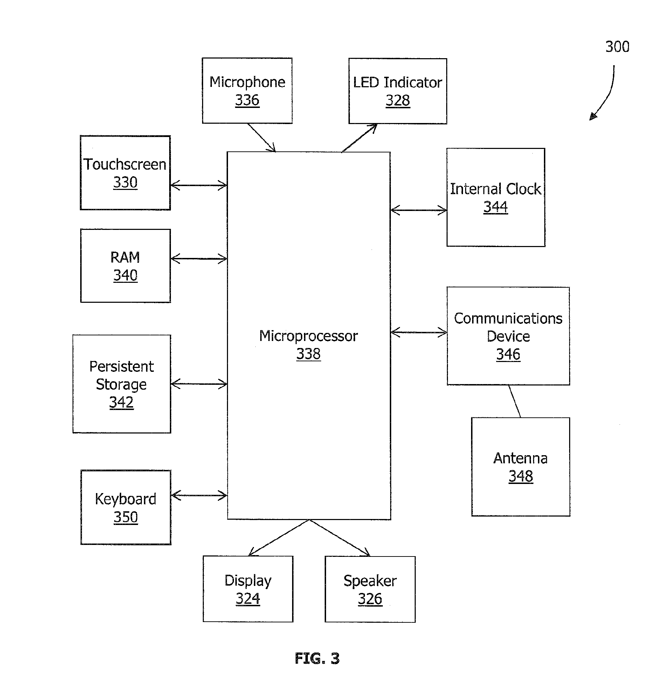

Figure 3 illustrates a block diagram of certain components of a computing device 300, which is representative of input device 102 as well as computing devices 300 implementing one or more components of the internal services engine 200 and performance improvement engine 400. In various exemplary embodiments, computing device 300 is based on the computing environment and functionality of a hand-held wireless communication device such as a smartphone. It will be understood, however, that the computing device 300 is not limited to a hand-held wireless communication device. Other electronic devices are possible, such as laptop computers, personal computers, server computers, set-top boxes, electronic voice assistants in vehicles, computing interfaces to appliances, and the like.

Computing device 300 may be based on a microcomputer that includes at least one computer processor 338 (also referred to herein as a processor) connected to a random access memory unit (RAM) 340 and a persistent storage device 342 that is responsible for various non-volatile storage functions of the smartphone 102. Operating system software executable by the processor 338 is stored in the persistent storage device 342, which in various embodiments is flash memory. It will be appreciated, however, that the operating system software can be stored in other types of memory such as read-only memory (ROM). The processor 338 receives input from various devices including the touchscreen 330, keyboard 350, communications device 346, and microphone 336, and outputs to various output devices including the display 324, the speaker 326 and the LED indicator(s) 328. The processor 338 is also connected to an internal clock 344.

In various embodiments, the computing device 300 is a two-way RF communication device having voice and data communication capabilities. Computing device 300 also includes Internet communication capabilities via one or more networks such as cellular networks, satellite networks, Wi-Fi networks and so forth. Two-way RF communication is facilitated by a communications device 346 that is used to connect to and operate with a data-only network or a complex voice and data network (for example GSM/GPRS, CDMA, EDGE, UMTS or CDMA2000 network, fourth generation technologies, etc.), via the antenna 348.

Although not shown, computing device 300 may be powered by a battery (e.g. where input device 102 is a smartphone) or alternating current.

The persistent storage device 342 can also store a plurality of applications executable by the processor 338 that enable the computing device 300 to perform certain operations including communication operations (e.g. communication between components of the intelligent services engine 200 or communication between computing devices 300). Software from other applications may be provided including, for example, an email application, a Web browser application, an address book application, a calendar application, a profiles application, and others that may employ the functionality of the subject matter disclosed herein. Various applications and services on the input device 102 may provide APIs at internal service interfaces 118a for allowing other software modules to access the functionality and/or information available by internal service interfaces 118a.

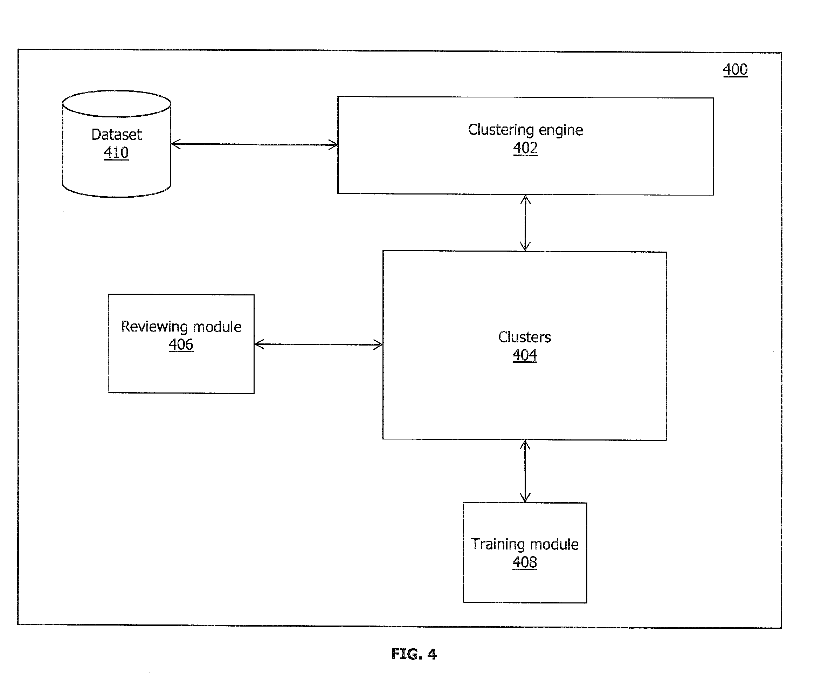

Figure 4 illustrates an embodiment of components of a performance improvement engine 400. The performance improvement engine 400 can comprise a clustering engine 402 for performing one or more clustering operations on the data within dataset 410, a set of clusters 404 created as an output by the clustering engine 402, a reviewing module 406 for analyzing clusters 404 and for taking action thereupon, and a training module 408 for using one or more clusters 404 to retrain existing models and to train new models for previously unsupported categories. In various embodiments, the dataset 410 includes text representations of voice queries made by users of the intelligent services engine 200 as users interacted with the application 104 on device 102.

It will be appreciated that performance improvement engine 400 may communicate with input devices 102 and/or intelligent services engine 200 over any communications network 106 such as the Internet, Wi-Fi, cellular networks, and the like. Performance improvement engine 400 may be a distributed system in which components (e.g. dataset 410, clustering engine 402, clusters 404, training module 408, reviewing module 406, etc.) reside on a variety of computing devices 300 that are executed by one or more computer processors 338. Furthermore, each component may be horizontally scalable in a service-oriented infrastructure manner such that each component may comprise multiple virtual services instantiated on one or more services according to the load balancing requirements on any given service at a particular time.

In various embodiments, clustering engine 402 accepts data elements from the dataset 410 as inputs, and performs one or more clustering operations on the dataset. The dataset 410 can include information derived from audio queries 152 by the intelligent services engine 200. For example, the NLP engine 214 can be configured to store queries that could not be classified in the database 215 as a dataset. Such a dataset can then be transmitted by the intelligent services engine 200 to the performance improvement engine 400 (e.g. over a wireless network 106). Queries may not have been classified because, for example, an appropriate class was not supported by the intelligent services engine 200 or because the form of the query was such that the intelligent services engine 200 was unable to process it correctly.

Typically, the clustering process applied by the clustering engine 402 results in one or more clusters 404 being created. The data in each cluster 404 is related in some way, for example, in features, characteristics and/or in a probabilistic manner. Any one or combination of clustering techniques may be applied by the clustering engine 402. In various embodiments, the clustering engine 402 applies Naïve Bayes techniques for creating one or more clusters 404 of related data. Additional iterations of clustering operations may be performed after the first clustering iteration which may result in additional clusters 404 being created from the clusters 404 created after the first iteration.

The reviewing module 406 may be a user interface on an computing device 300 which allows a user to navigate through each cluster 404 created by the clustering engine 402 to determine the usefulness of each cluster 404 for improving and/or modifying the classification system. In various embodiments, the reviewing module 406 contains user interface elements for allowing a user to filter out clusters 404 or particular data elements within a cluster 404 based on the probability that a particular data element belongs to a particular cluster 404. The reviewing module 406 may include various user interface elements for allowing the user to tag a particular cluster 404 in one of the following ways: 1) to be added to an existing category supported by the classification system (i.e. to retrain existing models); 2) to be used to train one or more models capable of recognizing new categories currently unsupported by the classification system (i.e. to train new models); 3) ambiguous and 4) not useful at the current time for improving the classification system.

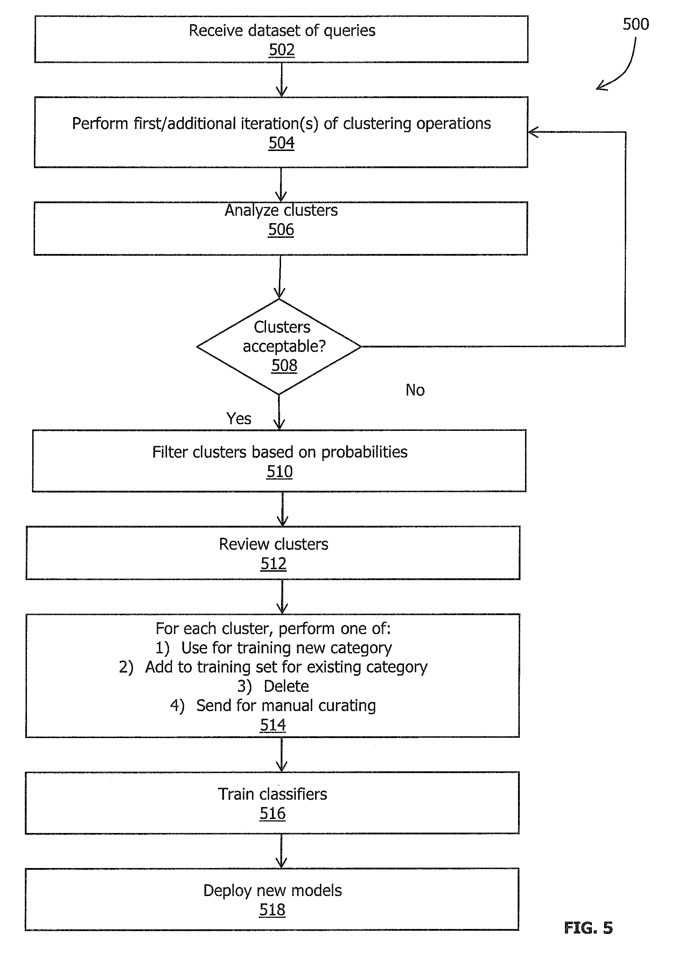

Reference is next made to Figure 5 to illustrate exemplary operations 500 for improving an existing classification system, such as a statistical classification system for processing natural language queries. At step 502, a dataset 410 of natural language queries is received by the performance improvement engine 400 from for example the intelligent services engine 200. The dataset 410 may be comprised of text-based natural language queries derived by the ASR 212 from one or more audio queries 152 posed by users of the input device 102. At step 504, a first iteration of clustering operations is performed on the dataset 410 by the clustering engine 402. Any suitable clustering or combination of clustering techniques may be used such as K-means, Lloyd's algorithm, other distance measures, etc. In various embodiments, Naïve Bayes clustering techniques are used to cluster the data in the dataset 410.

At step 506, the clusters may be analyzed at the reviewing module 406 manually or automatically using pre-determined operations to determine if subsequent clustering iterations are to be performed. If the reviewing module 406 determines that subsequent clustering operations are to be performed, the process continues at step 504 where additional clusters 404 may be created from the clusters 404 already created. If subsequent clustering operations are not required then the process continues at step 510 where the performance improvement engine 400 (e.g. using the clustering engine 402 or reviewing module 406) may filter out clusters 404 (or particular elements of one or more clusters 404) based on the probability that each data element belongs to a particular cluster 404. The threshold probability may be pre-set by a user of the performance improvement engine 400 to filter out clusters 404 that do not have the requisite "density" or elements of a cluster that are determined to be below the desired probability threshold.

In various embodiments, the clustering operations performed at step 504 continue until the clusters 404 at a subsequent clustering iteration are identical to the clusters 404 at a previous clustering operation. In such an embodiment, step 508 may be skipped.

At step 512, the clusters 404 generated by the clustering engine 402 may be reviewed at the reviewing module 406 manually and/or automatically using predetermined operations to determine how the data in each cluster 404 may be used to improve the performance of the classification system. In various embodiments, a user reviews each cluster 404 at step 514 manually and determines that each cluster is either: 1) useful for training a new category that is currently unsupported by the classification system; 2) useful for adding to an existing training set for an existing model so the model may be retrained; 3) ambiguous and a candidate for manual curating; and 4) not currently useful for improving the classification system.

Operations may automatically determine that a particular cluster is useful to train a new category. If clustering identifies input queries directed to a category which is not supported by the current set of classifiers, this may be identified such as by mapping. If the identified category from the clustering does not map to an existing classifier category, the cluster may be useful to train a new classifier.

Operations may automatically determine that a particular cluster is useful to retrain for further train an existing classifier (e.g. one directed to the same category as the cluster). The input queries of the cluster may be applied to the existing classifier and results compared. If the classifier results are different (i.e. there is a discrepancy between the classification results of the clustering operation and the classifier operations, the discrepancy may indicate that the existing classifier needs modification such as retraining with the additional input queries of the cluster. Various confidence measures may be calculated and compared for example.

A cluster may be determined to be ambiguous when confidence measure or density measures are below certain thresholds. The input queries may be manually reviewed and picked over, selecting queries of interest or discarding others for example, as part of the manual curation.

At step 516, the data from clusters 404 determined to be useful for improving the classification system is directed to the training module 408 so that the related models may be retrained and new models trained. In various embodiments, the training module 408 automatically retrains existing models with the additional training data provided by the clusters 404 and the training module 408 automatically trains new models so that the classification system may recognize additional classes. In other embodiments, the training module 408 is operated manually by a user (such as an administrator or other person who is responsible for administering the model). The user may select, via a training user interface, which models are to be retrained using the additional data provided by the clustering engine 402 and whether new models are to be created using data provided by the clustering engine 402.

Existing models, retrained models, and/or new models can be exchanged between the intelligent services engine 200 and the performance improvement engine 400 over a wired or wireless network (e.g. wireless network 106). Upon receiving a retrained statistical model, the intelligent services engine 200 can be configured to implement the model in place of the previous model. Likewise, the intelligent services engine 200 can be configured to implement a new statistical model for classifying previously unrecognizable queries once received from the performance improvement engine 400.

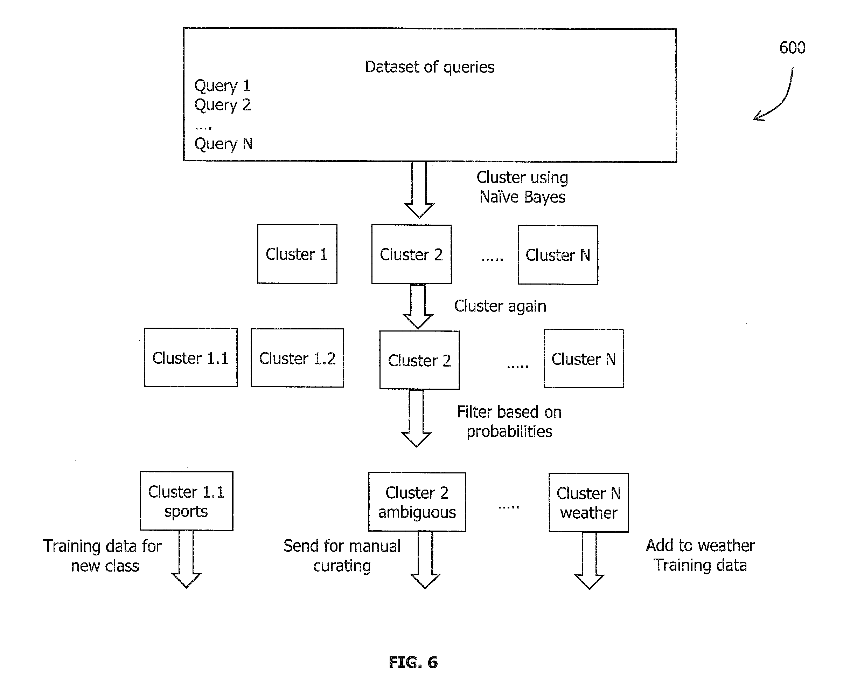

Reference is next made to Figure 6 to illustrate a specific example 600 of the performance improvement engine 400 improving a particular classification system received from an intelligent services engine 200. In this particular example the classification system implemented by the intelligent services engine 200 is configured to accept natural language queries as audio queries 152, and is capable of interfacing with service interfaces 118 to provide information and perform commands related to weather, stocks, and television (and not for example sports). As such, the intelligent services engine 200 is configured to classify audio queries 152 into the appropriate classes (i.e. weather, stocks and television classes) using one or more models, such as statistical models. Over time, one or more audio queries 152 may be received by the intelligent services engine 200 relating to classes (e.g. sports) that are not related to the classes supported by the intelligent services engine 200. These audio queries 152 may be processed by the performance improvement engine 400 and the resulting information used to designate queries that are in demand by users and to train new classifiers that can reside on the intelligent services engine 200 to recognize such queries in the future.

A dataset 410 of data based on one or more audio queries 152 may be provided to the performance improvement engine 400 in a computing environment. The performance improvement engine 400 may employ a clustering engine 402 using one or more clustering techniques (e.g. Naïve Bayes clustering) to generate clusters 1,2...N. In some embodiments, additional clustering iterations may be applied by the clustering engine 402 in order to generate clusters 1.1, 1.2, 2...N whereby clusters 1.1 and 1.2 were created from cluster 1 of the first clustering iteration. Once the clustering operations are finished and a final set of clusters has been generated, a filtering operation may be performed (e.g. by the clustering engine 402 or the reviewing module 406) to eliminate clusters that have a "density" or closeness (e.g. standard deviation) below a particular threshold or to eliminate particular data elements from a given cluster that have a probability of belonging to the cluster below a particular threshold.

As shown in Figure 6, cluster 1.2 (and perhaps others) has been eliminated from the process during the filtering step because the "density" of cluster 2 was below a threshold predetermined by an administrator (such as a natural language processing engineer). At the final state, cluster 1.1 has been reviewed by an administrator and has been found to contain data (i.e. queries) related to a sports domain (i.e. class/category). Given that in the particular example illustrated in Figure 6 the intelligent services engine 200 is not configured to classify input queries relating to the sports class, cluster 1.1 may be used to train one or more models configured to classify data into the sports class. In various embodiments, cluster 1.1 may be directed to a training module 408 if the number of data elements (queries) within the cluster is above a certain threshold. Cluster 2 has been determined to be ambiguous by an administrator and may therefore be tagged as requiring manual curating by specialists. Cluster N is related to the weather class and may be directed to a training module 408 in which the data from cluster N may be added to the training set initially used to create the models configured to classify queries into the weather domain.

The foregoing description has been presented for the purpose of illustration; it is not intended to be exhaustive or to limit the claimed subject matter to the precise forms disclosed. Persons skilled in the relevant art can appreciate that many modifications and variations are possible in light of the above disclosure. As such the embodiments disclosed herein are intended to be illustrative and should not be read to limit the scope of the claimed subject matter set forth in the following claims.

Some portions of this description describe embodiments of the claimed subject matter in terms of algorithms and symbolic representations of operations on information. These algorithmic descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. Furthermore, it has also proven convenient at times, to refer to these arrangements of operations as modules, without loss of generality. The described operations and their associated modules may be embodied in software, firmware, hardware, or any combinations thereof.

Any of the steps, operations or processes described herein may be performed or implemented with one or more hardware or software modules, alone or in combination with other devices. In one embodiment, a software module is implemented with a computer program product comprising computer-readable medium containing computer program code, which can be executed by a computer processor for performing any or all of the steps, operations, or processes described.

Embodiments provided herein may also relate to an apparatus for performing the operations herein. This apparatus may be specially constructed for the required purposes, and/or it may comprise a general-purpose computing device selectively activated or reconfigured by a computer program stored in the computer. Such a computer program may be stored in a tangible computer readable storage medium or any type of media suitable for storing electronic instructions, and coupled to a computer system bus. Furthermore, any computing systems referred to in the specification may include a single processor or may be architectures employing multiple processor designs for increased computing capability.

## Claims

1. A computer-implemented method for improving a statistical classification system comprising one or more statistical classifiers, the one or more statistical classifiers configured to classify an input query into one category of a set of one or more categories, the method comprising:
storing an input query dataset comprising a plurality of input queries;
performing one or more iterations of clustering operations on the input query dataset to create clusters of input queries related by category,
wherein each of the one or more input queries is assigned to one of the clusters;
for a respective one of the clusters, training a statistical classifier to classify the one or more input queries into the respective related category; and
providing the statistical classifier for implementing in the statistical classification system.

2. The method of claim 1 wherein the clustering operations utilize one or more of K-means, Lloyd's algorithm, other distance measures, and Naïve Bayes clustering techniques.

3. The method of claim 1 or claim 2 comprising automatically filtering the clusters using a probability threshold to at least one of: eliminate a particular cluster and eliminate a particular input query from a particular cluster.

4. The method of any one of claims 1 to 3 wherein the training comprises one of retraining one of the statistical classifiers from the statistical classification system; and training a new statistical classifier for a new category for the statistical classification system.

5. The method of claim 4 comprising providing a user interface for manually identifying a respective cluster as one of: useful for adding to an existing training set for retraining one of the statistical classifiers from the statistical classification system; useful for training the new statistical classifier for the new category for the statistical classification system; a candidate for manual curating; and not currently useful for improving the statistical classification system.

6. The method of claim 5 comprising providing a user interface for initiating training in accordance with said manually identifying.

7. The method of any one of claims 1 to 6 wherein the statistical classification system comprises a natural language processing system and the input queries comprise audio queries or text-based queries derived from audio queries.

8. The method of claim 7 wherein the audio queries are voice commands.

9. The method of any one of claims 1 to 8 wherein the input query dataset comprises input queries related to one or more categories which are additional to the categories in the set of one or more categories.

10. A computer system for improving a statistical classification system comprising one or more statistical classifiers, the one or more statistical classifiers configured to classify an input query into one category of a set of one or more categories, the system comprising one or more processors coupled to memory storing instructions and data for configuring the computer system to perform a method according to any one of claims 1 to 9.

11. A non-transitory computer-readable medium for improving a statistical classification system comprising one or more statistical classifiers, the one or more statistical classifiers configured to classify an input query into one category of a set of one or more categories, the non-transitory computer-readable medium comprising instructions that, when executed, cause a computer to perform a method according to any one of claims 1 to 9.
